# EUROPEAN PATENT APPLICATION

(11) **EP 4 589 495 A1**
(43) Date of publication of application: **23.07.2025**
(21) Application number: 24152269.7
(22) Date of filing: 16.01.2024
(51) Int. Cl.: G06Q 10/04, G06Q 10/0631

(54) **AI BASED PLANT STATUS REPORTING**

(71) Applicant: ABB SCHWEIZ AG, 5400 Baden (CH)
(72) Inventor: SCHOCH, Nicolai, 69120 Heidelberg (DE); THRYBOM, Linus, 722 42 Västerås (SE); TAN, Ruomu, 68163 Mannheim (DE); BORRISON, Reuben, 68782 Brühl (DE); SIVANTHI, Thanikesavan, 5303 Würenlingen (CH)
(74) Representative: Maiwald GmbH

(57) **Abstract**

A computer-implemented method is presented for reporting about a status of a plant, wherein the method comprises the steps of receiving (S2) by an artificial intelligence, Al, module (50) a query to generate a plant status report (5), determining (S3) by the AI module at least one plant parameter status information (19) of at least one plant parameter of interest based on the query, wherein the plant parameter status information comprises operational information of the plant parameter of interest, generating (S4) the plant status report (5) including the determined plant parameter status information.

## Description

### 1. FIELD OF THE INVENTION

The invention relates to a computer-implemented method for reporting about a status of a plant, a corresponding system, a computer program product and a computer-readable medium.

### 2. BACKGROUND

Control and organization of plants and industrial complexes often requires supervision and maintenance of a plurality of components and operational aspects. Plant operators accordingly often face the problem of gathering relevant and correct information for operating and controlling the plant. It might be cumbersome and error prone if an operator collects the information, which is, in his opinion, relevant for operation. This problem even worsens when a proper knowledge transfer between the different operators is required for properly operating the plant, for instance when multiple operators are designed to control a plant in part or completely. For instance, in case a plant is operated in multiple shifts, an information exchange between the operators of each shift is often desirable to ensure a proper operation of the plant.

Thus, there exist a need for an improved method and system that support an operation of a plant.

### 3. SUMMARY OF THE INVENTION

The object is achieved by the present invention according to the independent claims. Preferred embodiments of the invention are provided in the dependent claims, the description, and the accompanying figures.

The present invention relates to a computer-implemented method for reporting about a status of a plant.

The method comprises the step of receiving by an artificial intelligence, Al, module a query to generate a plant status report.

The method further comprises the step of determining by the Al module at least one plant parameter status information of at least one plant parameter of interest based on the query, wherein the plant parameter status information comprises operational information of the plant parameter of interest.

The method comprises the step of generating the plant status report including the determined plant parameter status information.

Accordingly, a method may be provided that may allow to simplify plant operation by automatically determining and gathering suitable information of relevant parameters in a plant status report.

A plant may comprise any industrial site, complex or network, which may comprise a multitude of different components and workflows that may require a proper control and supervision. A status of a plant may accordingly comprise information about one or more plant parameters of interest, which may comprise any components or workflows of interest. Non-limiting examples of such plant components or plant parameters of interest may comprise any kind of manufacturing or processing machines, storage tanks, pipelines, valves and electrical or electronic devices. Respective operational information of said plant parameters of interest may include, for instance, a general performance, an uptime, frequent alarms, efficiency, a pressure, a flow rate, and/or a maintenance record of the respective plant parameter of interest. Further details of events may also be provided by requesting more detailed information from the system by a user. In case of a system event, the prior sub-system events may be an example of such further details. Another example of further detail may be to provide a summary of likely correlated events taking into account the system design and the sub-system interdependences.

A query may comprise any kind of request of information, which may be supplied manually by a user or operator or automatically, for instance based on a regular schedule to the Al module. A manual request may for instance include a textual input of the user via respective input means, such as a keyboard or may comprise a verbally articulated command, received and forwarded by a microphone. The query may be stated in a general manner without explicitly stating, which specific plant parameter status information or respective operational information is requested.

A plant status report may comprise accordingly a report or summary concerning one or more parameters of relevance regarding the operation or condition of a plant. A plant parameter status information may comprise any information related to a status or condition of a certain component or operation parameter of a plant. A respective plant parameter of interest may accordingly include any technical, physical, chemical, biological, historical or any other parameters, that may be of interest for an operator of a plant. The presented solution may save time for a user or operator of the plant by getting updated about current or past operations of the plant and the corresponding relevant plant parameters. Accordingly, also safety of operation of the plant may be enhanced based on the determined relevant information. Likewise, irrelevant information may be omitted without further input of an operator which would otherwise be required to manually distinguish and evaluate the respective information. The proposed solution including leveraging an Al module, as described in detail further below, may be accordingly more capable than previous methods in the generation of compact and easy-to-understand information for human operators or users based on large and comprehensive system descriptions. This may concern for instance complex Piping and Instrumentation Diagrams, P&ID, and the AI module may accordingly facilitate the addition of a description of the system dynamics using, for instance, a process status or acquired signals over time.

An AI module may comprise any suitable AI or machine learning (ML) based entity that may allow based on respective training to determine respective information about one or more plant parameters. The AI module may be embodied at least partially in respective hardware and/or software. Contrary to prior art solutions the potentially relevant status information may be accordingly determined first by an AI module based on the query, which may be distinguished from a conventional state query according to the prior art. The AI module may be accordingly operatively coupled to respective one or more plant parameters of interest or components of the plant from which the Al module may gather corresponding information upon which the plant status report may be based. Hence, the Al module may be supplied with information of one or more sections or parts of the plant, or the Al module may be allowed to gain access thereto to collect the respective information. The Al module may comprise one or more Al based components, as will be described below in detail, that may for instance enable processing the input (e.g. a query) and potentially also the output (e.g. a report) accordingly. For instance, the Al module may comprise an instruction-tuned large language model, LLM, and/or a generative Al model, which may be fine-tuned on a small set of suitably chosen input and output schema training data. Such training data sets input may, for instance, describe how, in a plant environment, typical combination of events and alarms and time series data looks like. It may also consider how a desired, e.g. human-generated, summary should look like. Thus, the AI module may be trained with information regarding the attempted resulting content, such as a (summarizing) plant status report, which also may be referred herein as summary report, for instance regarding the focus of the report, the desired format in which it should be presented, etc. A typical instruction-tuned model may allow to fine-tune on such potentially relatively small and focused input/output schemes, so it may serve the exact purpose of summarizing what is important.

Further, to address potential hallucination of LLMs / Generative Al, and to overcome these (i.e., avoid hallucination and avoid giving wrong summaries), the AI module may be serviced and controlled by performing sanity checks against real alarms or event lists, or consistency checks with alarm names and processes. In another embodiment, the generated plant status report may read over by a user and the generated summary may be accordingly checked and potentially corrected, e.g. based on a given feedback. Even further, fine-tuning might be possible using the human feedback of the above, e.g. in form of Reinforcement-Learning from Human Feedback, RLHF, for further improvement of the system and method. Also, multiple modalities, including time series, text, and video, may be encoded as joint representations for training, where all modalities are projected onto the same space, or they may be based on coordinated representations, where each modality exists in its own space but is coordinated by a constraint, such as partial order. In order to capture cross-modal interactions and fuse modalities in a more meaningful way, data may be handled utilizing fusion approaches like cross-attention layer mechanism.

The AI module may be accordingly trained to distinguish based on respective training which operational information is of interest for the entity that provided the query and should be accordingly provided in the plant status report. As an example, a user may query "How did the separator perform last week?", and the AI module may accordingly determine which information regarding the separator may be of importance and may be accordingly gathered for the plant status report. The query may not be necessarily formulated as a sentence but may also only comprise one or more keywords.

The generation of the plant status report may include the preparation and submission of a visual and/or audio summary of the determined plant parameter status information. This may be performed by one or more components of the AI module comprising respective means to create text information, image information, video information, audio information or an arbitrary combination thereof based on the determined plant parameter status information. However, in different embodiments, the generation of the plant status report may also be performed (at least partially) by conventional computational means which may be accordingly supplied by the AI module with the information needed to generate a respective plant status report. A facilitation may be provided via a set or combination of transformer neuronal networks for multimodal input data processing into latent representation and/or embedding space, for subsequent summarization and generation of specifically focused plant or component(s) status summaries. The plant status report may be provided in form of text, image, audio, video format, or combinations, or for instance dashboards again using a set or combination of existing or fine-tuned instruction-tuned transformer models, for instance for text summarization, image transformation, image/video/audio generation, etc.

In a preferred embodiment, the query is generated by a user via a user interface, wherein the user interface is adapted to receive user input, and the method further comprises the steps of sending the query from the user interface to the AI module, and after generating the plant status report, sending the generated plant status report to the user.

Thus, a user or operator may be supplied in a quick and reliable manner with relevant status information of one or more plant parameters of interest based on the query. A user interface may comprise any means that may allow the input of user information, such as a keyboard, a mouse, a microphone, etc. The interface may comprise a computer and may comprise a display, showing for instance a search field in which a user may enter a respective query. The plant status report may be sent to the user for instance in form of a summary page displayed on the screen and/or in form of an audio report. It is noted that the report must not necessarily be sent to the same input interface at which the user has input the query, but it may be also forwarded to a different location at which the user may then receive the report, e.g. at a different computer. The user interface may be accordingly provided with respective means to output the resulting video and/or audio information.

In a further embodiment, a user may be provided with the plant status report based upon a query that is not provided by a user, but that is automatically generated for instance in a periodical manner. E.g. a weekly status report may be provided to a user based on an automatic query that is send to the AI module.

In a preferred embodiment, the method further comprises the steps of determining control instructions for controlling one or more plant components based on the determined plant parameter status information and generating the plant status report including the determined control instructions.

Thus, an operator may be suitably enabled to control one or more plant components in an optimized manner. For instance, malfunctions or suboptimal operation of a plant component may be accordingly addressed and overcome by determining control instructions to suitably adapt the control of the plant component. Control instructions may comprise and consider the determined plant parameter status information of the respective plant parameter or component to be controlled, and may also consider further components, which may interact or relate to said plant component. An operator may accordingly not only be made aware of respective plant parameter status information but may also be provided with information regarding a suitable control to operate the plant component in an optimized manner. The method may accordingly allow considering any suitable values or ranges of operation, which may be for instance pre-stored, and which may indicate an optimum operation range of each plant parameter. If the plant parameter exceeds the optimum operation range, the method may suggest respective controlling instructions to achieve that the control parameter returns to the optimum operation range.

The determination may be preferably performed by the AI module, which may be accordingly trained to determine suitable controls of the respective plant component. The control instructions may be provided to a user via the plant status report to allow a respective manual or semi-manual control of the plant component. In another embodiment, the control instructions may be directly sent to respective automatic control means to initiate a respective control of the plant component automatically without further user input. As an example, a service or maintenance engineer may request a summary of the status of a specific (sub-)system of the plant, as well the recent maintenance actions and a set of recommended new maintenance actions including the reasoning for doing them, which may be accordingly included in the resulting plant status report.

In a preferred embodiment the plant status report comprises at least one of text information, image information, video information, audio information, statistical information, numerical values, tables, visualizations and/or figures.

Thus, the report may exhibit any suitable form for providing the determined information in a convenient manner to a user. The report may be generated by respective processing means, such as a text report generating module or an audio/video report generating module, which accordingly may generate a text report and an audio/video report, respectively, about the status of the one or more plant parameters of interest. Any kind of desirable information and format may be included and processed, such as for instance the above noted text information, image information, video information, audio information, statistical information, numerical values, tables, visualizations, figures and any arbitrary combination of one or more of the beforementioned, such as, as a non-limiting example, a text report with images and/or statistics.

It will be understood that the AI module may also comprise further and different means for creating an audio/video and text content-based summary or report, and of course also a combination thereof, i.e. a report containing audio, video and text. Employing an Al-based system may provide a flexible generation of a report in multiple formats, e.g., supporting multiple languages (e.g. in a text form), multiple body-languages (e.g. in a video form) and multiple cultural avatars (e.g. in a video form).

In different embodiments, the generation of the plant status report may not be (solely) performed by the AI module, but by separate non-Al means that are similarly capable of creating respective audio-, video- and or text-based reports. The respective text, image, video and/or audio information may be accordingly combined in the report as desired. In one embodiment, the plant status report may be provided to a user by an avatar explaining the details of the report, which may comprise for instance a software engine generating the summary based on the occurrences or events to be reported.

The report may comprise a simple text summary or a sophistic8ated video/image-based presentation with natural language explanations on the audio track. In some embodiments, the report may be provided to allow for interactive deep-dives, for instance regarding events, anomalies, processes that are reported on an operator request, or on mouse-curser hover-over, or following eye-tracking, etc. alarms that may be provided at the plant status report may be accordingly verbalized or it may be schematically shown what kinds of alarms have happened, or which "classes" of anomalies have appeared.

In a preferred embodiment, the plant parameter status information includes current status information comprising data of the plant parameter of interest acquired at a current time instance, and/or the plant parameter status information includes past status information comprising data of the plant parameter of interest acquired at a past time instance or range, preferably wherein one or more of the data of the current status information or the past status information is detected by sensors adapted to acquire operational information of the plant parameter of interest.

Thus, the method according to the present invention may allow considering status information of the plant parameter at different time instances or time ranges. Current status information may comprise any status information at a current or present time instance or time range of interest, for instance real-time acquisition data of the respective plant parameter of interest. Non-limiting examples are, for instance, a current filling level of a tank, a current power consumption of machine of the plant or a current status of valves controlling a fluid flow through a piping of the plant. Any of those parameters may be accordingly acquired by sensors or detectors that may be arranged at the respective parts and components of the plant.

Also an indirect determination of the respective data, such as a power consumption of a motor, for which no specific sensors or detectors are needed, may be employed. Also, past status information of the respective components may be considered, which information may be stored on respective storing means that may be accessible by the AI module. Non-limiting examples for past status information may comprise for instance data concerning the respective status information of the plant component of the last day, the last week, the last month, or the last year. Also a combination of present and past data may be employed. The AI module may decide to provide the acquired data directly to the user or may decide to use said data as a base for the determination or calculation of further results, which then may be provided to the user.

The current and/or past status information of the plant component may include alarms that came up during a considered period of time, human operator interventions, interferences and/or control, time series data for different sensor values, operation mode sequences, control status values, etc.

In a preferred embodiment, the plant parameter status information includes or is based on information of historical documents.

Thus, the plant parameter status information may not only be based on acquired or sensed information, as described above, but may also consider prior knowledge based on known documents, such as for instance manuals or technical documentation regarding the concerned plant component or operation process. Historical documents may comprise any kind of digitally accessible documents containing information about the respective plant parameter or plant component of interest. This may allow the AI module to determine suitable plant parameter status information for one or more plant components even without having access to sensors or detectors. Historical documents may accordingly include past information regarding the plant parameter of interest of the same components or for instance different but similar components. Thus, suitable information for one or more plant parameters of interest may be additionally or alternatively derived from components, which work alike or in a similar manner.

In a preferred embodiment, the plant parameter status information includes information about at least one of a plant component, a key performance indicator, KPI, of the plant component and/or a process variable.

Thus, different parameters relating to the organization and control of the plant may be included. Comparing to conventional approaches, the proposed Al-based method may accordingly allow an increased flexibility and an improved adaptability, wherein a resulting plant status report or summary report may be generated for a certain KPI and/or one or more certain plant components without prior configuration, for instance, only based on historical documents and/or real-time information collected from the process.

A plant component may comprise any component that is related to an operation or function of a plant. Non-limiting examples of plant components may comprise any kind of manufacturing or processing machines, storage tanks, pipelines, valves and electrical or electronic devices. KPIs may comprise respective output or power values of one more components and may indicate the most important values or parts of each plant component and/or may indicate important events that have occurred with respect to a certain plant parameter. A KPI may generally comprise any element that is of particular importance in connection with a condition or definition of a respective plant parameter or plant component such as at least one of a measured value, a parameter, a variable or an event.

A process variable may comprise any kind of variable parameter that may influence or is related to the operation of the plant, such as filling levels, pressure values, electrical current values and/or running times, e.g. of machines. The process variable may comprise numerical, time series data. Also, further and different components or parameters may be included in the plant parameter status information. The respective plant components, KPIs of the plant component, and/or process variables may be included separately or in combination in the plant parameter status information.

In a preferred embodiment, the method comprises the steps of determining by the AI module a forecast information about a forecasted future state of the plant parameter of interest based on the operational information of the plant parameter of interest, and generating the plant status report including the forecast information.

A user may be accordingly suitably provided not only with present and past data, but also with forecasted information regarding a plant parameter of interest. Thus, the operational safety of a plant may be improved, for instance by determining a critical running time of a plant component or the future development of forecasted pressures based on past and present operational information regarding the respective plant parameter. The AI module may allow to generate and present to a user one or more possible future system scenarios and/or their likelihoods to occur and may also provide the underlying reasoning behind the respective forecast.

A forecast information may comprise forecasted or simulated future information regarding a future condition or state of a plant parameter of interest. A user may accordingly apply or adapt suitable controls necessary to achieve an optimum and safe operation of the plant. The AI module may be accordingly trained and supplied by suitable data that may allow the AI module to perform forecasts and may comprise suitable (e.g. software) means to forecast a respective plant parameter of interest. For instance, the AI module may determine a forecasted future pressure inside a storage tank based on past and present pressure values of said tank. The forecasted information may also include limits within which the respective plant parameter of interest should optimally operate or is safe to operate. The AI module may accordingly issue an alarm if a forecasted value would exceed one or more predetermined thresholds for safe and/or optimal operation.

In one embodiment, the forecasted information may include possible risks or events that may disturb the system. Or the forecasted information may indicate what tasks or control need to have extra attention on and may provide recommendations of possible actions to further improve the system performance.

In one embodiment, the plant status report comprises a shift handover report comprising information for a handover from a first shift of plant operators to a second shift of plant operators, wherein the shift handover report includes a summary of one or more plant parameters of interest for the second shift of plant operators.

Thus, shift switching may be facilitated and enhanced by providing all relevant information to the plant operators of the second shift. This may allow saving time when handing over the responsibility for operation of the plant from one team of a previous/first shift to another team of a following new/second shift.

A handover, and in particular a shift handover, may include to transfer of operation, control and responsibility of the plant or parts thereof to another user or operator. For instance, the method according to the present invention may provide an improved way to introduce the new shift team to what has happened during the previous shift, and what to take notice of during their upcoming shift, possible risks, or events to be prepared for, as well as possible ways to further improve the system performance.

The summary may be generated upon a query of plant operators of the new shift or may be generated automatically, for instance at a time when the new shift is to take over operation of the plant. The summary report for the second shift may for instance include information about any occurrences or relevant information of the previous shift. Non-limiting examples of questions addressed in the summary report may include: "What has happened, other than normal stuff e.g., maintenance operations? How was it dealt with? Which unfinished tasks or issues or processes need to be addressed? Is a mitigation process still running, and requires specific attention until it's fully back to normal mode?".

Furthermore, the (e.g., shift handover) summary/report could be for instance based on data from the recorded and/or historical data, e.g. for the previous 8 hours, the previous day etc. or forecasted future events. Thus, a respectively next shift team may be onboarded and updated faster and in a more comprehensive way and without the risk of forgetting anything and without time requirements from the previous shift team.

The next shift team may also be better prepared for possible risks or disturbances that may occur as they are already pre-noticed of them, as well as may be provided with suggestions to further improve the system performance or limit the impact for the disturbances. Summarization of the plant parameter status information and the generation plant status report may also be tailored to the roles and KPIs of the respective shift personnel and may even prioritize some of the actions to be taken by the personnel. Additionally, such plant status reports may also automatically suggest successful actions that were taken in the past in relation to the incidents reported in the shift handover.

Further, the presentation of the plant status report may be calibrated or fine-tuned such that it may focus on processes that are running at the moment of shift switching first, and only after that may present what had happened in the overall previous shift time. Or the report may provide the context of event, anomalies and/or processes, and then a user of the new shift may be allowed to interact and "zoom in to" or "focus" on only those processes that are currently running to mitigate anomalous events that required the previous shift team's intervention.

In line with the explanations above, to address potential hallucination of the AI module, such as for a LLM module and/or a generative AI module, the system may perform sanity and consistency checks against alarm and event lists, or ask for feedback from the leaving shift team, etc.

In a preferred embodiment, the AI module comprises at least one of an intent identifying module adapted to identify an intend of the query, a large language model, LLM, module adapted to create an LLM output based on current, past or forecasted status information of the plant parameter of interest, and a generative AI module adapted to generate the plant status report.

Thus, the AI module may comprise one or more suitable modules to address different instances in data acquisition, proceeding and output. An intent identifying module may comprise a software or data processing entity adapted to extract an intention of a query. For instance, the intent identifying module may allow to identify and proceed only certain relevant parameters for operation, while other parameters may be disregarded. This intent recognition may be user based. Thus, when different users with different skills and tasks potentially formulate the same query, a different intent of each user may be identified. For instance, a first user may be interested in the power or efficiency of a plant component, while a second user may be interested in security of the operation of the plant component. Based on the training of the AI module, which may consider different users and/or input queries, the intent identifying module may be able to distinguish and identify respective intents from the query. Thus, also vaguely or broadly stated queries may result in obtaining the desired results for the operator.

The AI module may accordingly collect relevant information such as current and past status information, which may be acquired by respective sensors concerning the plant parameter of interest. Or forecasted status information may be determined based on the present and past status information. The AI module may accordingly collect all relevant information from acquired data or historical documents, such as reports or manuals. The retrieved information may then be used as an LLM input or context, with which the LLM module may be provided. An LLM module may comprise a software or data processing entity that may be pre-trained and fine-tuned and may comprise a multimodal large language model. The LLM module may process the context and generate an LLM output, which may comprise for instance a list comprising the output information. However, it will be understood that, in other embodiments, the AI module may not, at least not exclusively, proceed the information by an LLM module but may also employ any other kind of suitably trained AI and/or neuronal network based module, which may accordingly provide a respective output.

The corresponding output, which may comprise preferably an LLM output, may then further processed by a generative AI module. A generative AI module may comprise a software or data processing entity that may be accordingly trained and may allow to generate, based on a certain input, an output in form of e.g. a text report, an audio report and/or a video report regarding the status of the one or more plant parameters of interest. It will be understood that the generative AI module may also comprise further and different means for creating an audio/video and text content-based summary or report, and of course also any arbitrary combination thereof, e.g. a report containing audio, video and text.

In a different embodiment, the generation of the report may not be performed by the AI module itself but by one or more separate non-AI data processing means that are likewise capable of creating respective audio-, video- and/or text-based reports.

The invention further relates to a system comprising an AI module, wherein the system is configured to carry out and/or control any of the methods of the present disclosure.

Accordingly, a system may be provided that may allow to simplify plant operation by automatically determining and gathering suitable information of relevant parameters in a plant status report.

The features of the system according to the present invention and in particular the AI module may be implemented at least partially by respective suitable digital or computational means, which can include, for instance, one or more computers, apps and/or networks. Any features and advantages noted with respect to the method of to the present invention apply accordingly to the system of the present invention and vice versa.

In a preferred embodiment, the system further comprises one or more sensors configured to acquire data of the plant parameter of interest.

Thus, the system may allow to detect and acquire any suitable information regarding any plant component or process parameter of interest of the plant. The sensors may be accordingly operably coupled to the system, and to the AI module, such that the AI module may be enabled to collect respective data from the sensors, as needed. For instance, the AI module may have access on current or real-time data of the sensors or may have access on past data of previous time instances or time ranges of data, which had been previously acquired by the sensors. The respective sensor data may be accordingly stored on respective internal or external storing means of the system.

In a preferred embodiment, the system further comprises at least one user interface adapted to receive user input.

Thus, a user may be enabled to input a query as desired to the system of the present invention. A user interface may comprise any means that allow the receipt of user input information, such as a keyboard, a mouse, a microphone, etc. The interface may comprise a computer and at least one display, upon which the search report may be displayed and on which a search field may be presented into which a user may enter a respective query. Also, further interaction of the user with the claimed system may be enabled by the user interface, such as allowing further inputs of the user in reaction of the receipt of the plant status report. The present invention is however not limited to the above noted methods of interaction but may encompass any kind of suitable interaction between a user and the system. For instance, the interface may be configured to allow a track of an eye movement of a user and may transfer the eye movement into corresponding commands to control the system.

Thus, reliable KPI-tuned or focused summary reports for plant components or parameters of interest may be obtained, e.g., for a shift team handover or for an interactive monitoring of the system. The screen location may also be fed as an image to the system to obtain, for instance, an exact P&ID of the system. Respective variables and further details may be accordingly extracted therefrom. The system may be trained to predict further from the operator screen data concerning the corresponding P&IDs or process variables. The information may then be used as feed for the AI module as an additional context together with the query of the user and potential historical information to generate a required answer.

The invention further relates to a computer program product comprising instructions which, when the program is executed by a computing system, cause the computing system to carry out and/or control any of the methods of the present disclosure.

The features of the system according to the present invention may be implemented by respective suitable digital or computational means, which can include, for instance, one or more computers, apps and/or networks.

The method may be at least partly computer-implemented, and may be implemented in software or in hardware, or in software and hardware. Further, the method may be carried out by computer program instructions running on means such as a computing system that provide data processing functions.

The computing system or data processing means may be any suitable computing means, such as an electronic control module etc., which may be a localized or a distributed computer system. The data processing means or the computing system, respectively, may comprise one or more of a processor, a memory, a data interface, or the like.

The invention further relates to a computer-readable medium comprising instructions which, when executed by a computer, cause the computer to carry out and/or control any of the methods of the present disclosure.

A computer program may be stored/distributed on a suitable medium such as an optical storage medium or a solid-state medium, supplied together with or as part of other hardware, but may also be distributed in other forms, such as via the Internet or other wired or wireless telecommunication systems.

Any of the computer or computing system, the computer-program product and/or the computer-readable medium described herein may be at least included in the system of the present invention or may be at least operatively coupled thereto.

The features and advantages outlined above in the context of the system and the method similarly apply to the computer program product and the computer-readable medium described herein.

Further features, examples, and advantages will become apparent from the following detailed description of preferred embodiments and the accompanying figures.

### 4. BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same or like reference signs. Any reference signs in the claims should not be construed as limiting the scope of the claims.

In the accompanying drawings,
- Figure 1: schematically illustrates a method and a system according one embodiment of the present invention;
- Figure 2: schematically illustrates a method and a system according one embodiment of the present invention;
- Figure 3: schematically illustrates a plant status report according one embodiment of the present invention.

### 5. DESCRIPTION OF EMBODIMENTS

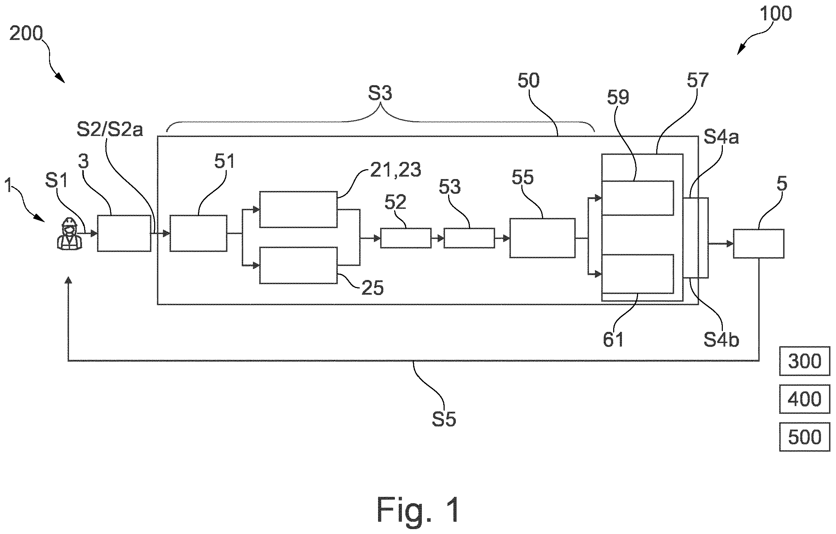

Figure 1 depicts one embodiment of the method 100 and the system 200 of the present invention. Herein, a user 1 generates a query at a user interface 3. The user interface 3 may for instance comprise a keyboard and a display, wherein the user 1 may generate and enter the query, as indicated by S1, in form of a text, such as a question like "How did the separator perform last week?". However, also any other query concerning a different plan component 7 or operation flow of the plant may be supplied instead. Further, the user 1 may of course also input the query in any different suitable type and the user interface 3 may be accordingly adapted thereto. For instance, the user may verbally articulate the query and the user interface 3 may accordingly include a microphone in addition or alternatively to the keyboard to receive the verbal query. The query is then sent to, as indicated by S2a, and received by, as indicated by S2, an AI module 50. The AI module 50 may be part of a computing system 300 comprising respective data processing means or may be separate or at least partially operatively coupled thereto. Based on the query, the AI module 50 may then determine at least one plant parameter status information 19 of at least one plant parameter of interest, as indicated by S3.

In the above noted example, one or more relevant parameters of the separator may be accordingly determined by the AI module 50. An example of the determination is described as follows. The AI module 50 may comprise an intent identifying module 51, which is configured to extract an intention of the query. For instance, regarding the above example concerning the separator, the intent identifying module 51 may allow to identify only certain relevant parameters for operation and performance of the separator, while other parameters of the separator may be disregarded. For instance, if a separator has been newly installed, certain parameters for operation may be relevant for a user 1 compared to a different separator that already runs for a longer time. Or, when different users with different skills and tasks formulate the same question, a different intent for each user 1 may be identified, even when the same query is stated. For instance, a first user a may be interested in the power and efficiency of the separator, while a second user may be interested in the security of the operation of the separator. Based on the training of the AI module 50, which may consider different users and/or input queries, the intent identifying module 51 may be able to distinguish and identify respective individual intents from each query. Thus, even vaguely stated or unspecific queries may result in obtaining the desired results for the respective operator.

The AI module 50 may accordingly collect relevant information, such as a current status information 21 or a past status information 23, that may be acquired by respective sensors 63 concerning the respective plant parameter of interest. Different status information, such as for instance performance indicators, lifetimes, filling levels, runtimes and any other parameter connected to the operation of a respective plant component 7 may be considered or discarded by the AI module 50, as needed. In the above example concerning the separator, the AI module 50 may consider for instance a past power consumption of the separator and/or a current power consumption. Furthermore, the AI module 50 may accordingly collect relevant information from historical documents 25, such as reports or manuals concerning respective the plant component 7 or plant parameter of interest. The AI module 50 may be accordingly adapted to obtain access on the respective historical documents 25. Thus, not only sensor acquired status information, which may be provided in connection with the respective plant component 7 may be considered by the AI module 50, but also general information, such as for instance manuals or previous reports.

In the depicted embodiment, the retrieved information is then used as an LLM input 52 or context with which the LLM module 53 is then provided. It is noted that the present invention is not limited to the use of an LLM module, as described in this particular embodiment. Quite to the contrary, the present invention may employ any suitable AI/ML model in addition or alternatively to the LLM module described herein. Thus, any of the functions and features described herein with respect to the LLM module accordingly apply to a respective AI/ML model. As a non-limiting example, the invention may comprise for instance a respective multimodal model module instead or in addition. The LLM module 53 may be pre-trained and fine-tuned and may be a multimodal large language model. The LLM module 53 then processes the context and generates an LLM output 55, which may be for instance in form of a list of results. However, it will be understood that in other embodiments, the AI module 50 may also proceed the information not (at least not exclusively) by an LLM module, but also by any other kind of suitably trained AI and/or neural network-based module. The LLM module 53 may also have access to further software tools and agents, such as for instance Python tools. Thus, it may, in a non-limiting example, create and execute computer codes to analyze data and describe the outputs obtained from running the code.

The LLM output 55 is then further processed by a generative AI module 57, which comprises, in the depicted embodiment, a text report generating module 59 and an audio/video report generating module 61, which accordingly generate a text report and/or an audio/video report about a status of the one or more plant parameters of interest. It will be understood that the generative AI module 57 may also comprise further and different means for creating an audio/video and text content-based summary or report, and may create of course also a combination thereof, i.e. a report containing audio, video and text. However, the present invention is not delimited thereto but may comprise respective modules capable of providing any kind of desirable information and format for the report, such as for instance text information, image information, video information, audio information, statistical information, numerical values, tables, visualizations (e.g. a traffic light indicating a status), figures and any arbitrary combination of one or more of the beforementioned, such as, as a non-limiting example, a text report with images and/or statistics.

In different embodiments, the generation step is not performed by the AI module 50 but by separate non-Al means that can create respective audio-, video- and or text-based reports. In the depicted embodiment, the AI module 57 generates a respective status report based on the output of the text report generating module 59 as indicated by S4a and based on the output of the audio/video report generating module 61 as indicated by S4b, which is then combined to a respective plant status report 5. The plant status report 5 is then sent to the user 1, as indicated by S5. In some embodiments, a generation of the plant status report 5 is not performed by the AI module 50 but by conventional report creating means.

Thus, the proposed system and method according to the invention may allow to interpret the intent of a question and to extract relevant information from various sources, including time series data, technical documents, process topology, etc. Then, a formatted report may be generated, e.g., with bullet points and dedicated topics for the user to review. The user may in some embodiments drill down in certain topics to find details of relevance. This can be done, for instance, with more specific prompts for asking the AI module to query a database.

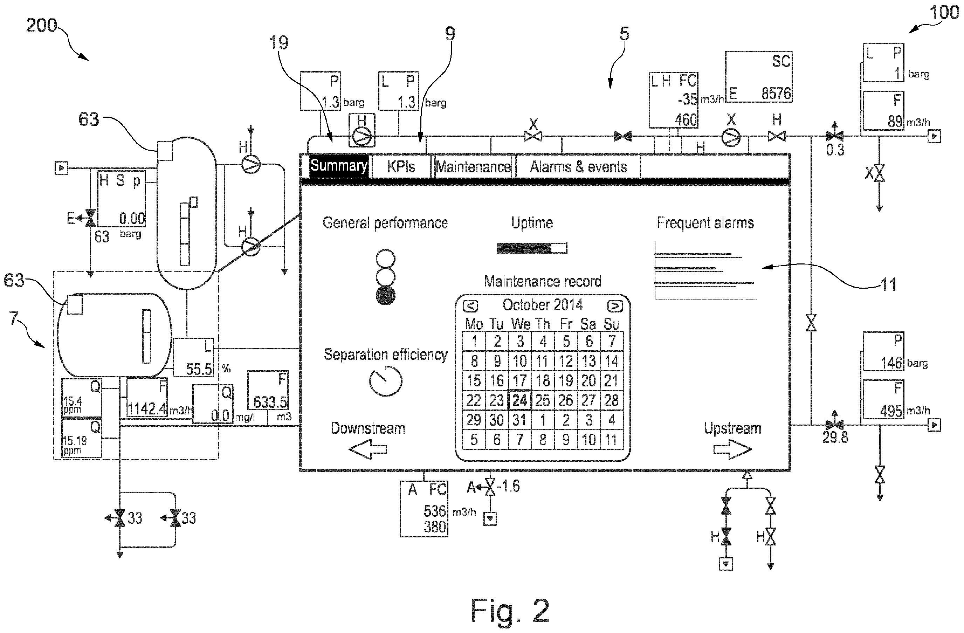

Further, a computer-program product 400 and a computer-readable medium 500 are shown, each comprising instructions, which, when executed by a computing system or computer 300, cause the computing system 300 to carry out and/or control the method of any embodiments of the present invention, in particular the method as illustrated in Figures 1 and 2. In the depicted embodiment, the computing system 300, the computer-program product 400 and the computer-readable medium 500 are depicted as external elements. However, it will be understood that in different embodiments, any of the computing system 300, the computer-program product 400 and the computer-readable medium 500 may be at least partly integrated and/or operatively coupled to the system 200.

Since the depicted embodiments is merely exemplarily, the method according to the present invention is not limited to the above noted examples or order of method steps. Quite to the contrary, the described method steps may be also provided in a different order and one or more of the above noted method steps may be omitted or further method steps may be added, as desired.

Figure 2 depicts an embodiment of the method 100 and the system 200 of the present invention. In particular, an exemplary schematic P&ID diagram of a plant is shown, which may be presented to a user 1. Further, a plant status report 5 may be presented as depicted, comprising information about the plant component 7 of interest which is, in the depicted example, a separator (encircled with dashed lines). As shown, upon the query "How did the separator perform last week?", different information is shown in the plant status report 5, such as text information 9 and image information 11 regarding for instance the general performance, the uptime, frequent alarms, separation efficiency and a maintenance record of the separator. Further, different tabs of the plant status report 5 provide further information about the KPIs, the maintenance and alarms and events concerning the separator. Further, respective information pages of the plant status report 5 may be switched upstream or downstream, such that further and different information could be called up by a user 1. The depicted information may for instance base on sensors 63, which may be provided the respective plant component 7 of interest, e.g. the separator or a different plant component, as schematically depicted.

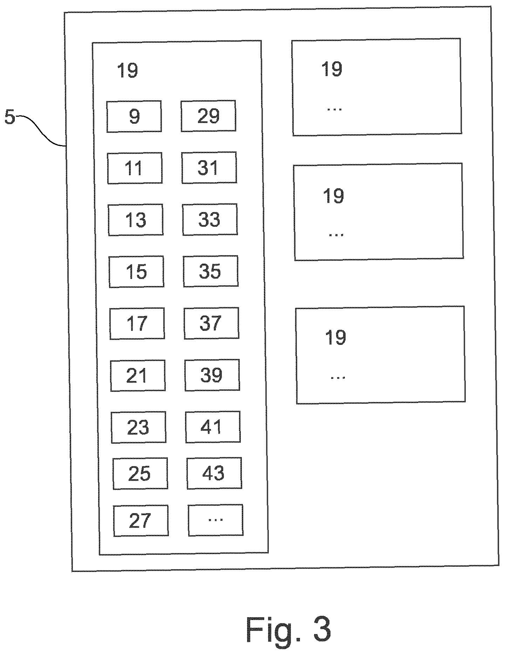

Figure 3 depicts one embodiment of a plant status report 5, wherein the plant status report 5 comprises plant parameter status information 19 about a plant component of interest 7. As depicted, the plant parameter status information 19 includes and/or considers text information 9, image information 11, video information 13, audio information 15, control instructions 17, current status information 21, past status information 23, information from historical documents 25, key performance indicators 27, process variables 29, forecast information 31 and a shift hand over report 33. It is noted that also one or more of the noted types of information may be omitted and further and different types of information may be provided, as indicated by the box with the three dots. The respective information may be provided, as depicted, individually in the plant status report 5 or, in different embodiments, in a combined manner, as desired. Furthermore, as depicted, the plant status report 5 may comprise also more than one plant parameter status information 19 relating to, for instance, a different plant component 7 and comprising one or more different corresponding plant parameter status information 19.

### LIST OF REFERENCE SIGNS

- 1: user
- 3: user interface
- 5: plant status report
- 7: plant component
- 9: text information
- 11: image information
- 13: video information
- 15: audio information
- 17: control instruction
- 19: plant parameter status information
- 21: current status information
- 23: past status information
- 25: historical documents
- 27: key performance indicator
- 29: process variable
- 31: forecast information
- 33: shift handover report
- 35: statistical information
- 37: numerical values
- 39: tables
- 41: visualizations
- 43: figures
- 50: AI module
- 51: Intent identifying module
- 52: LLM input
- 53: LLM module
- 55: LLM output
- 57: generative AI module
- 59: text report generating module
- 61: audio/video report generating module
- 63: sensor
- 100: method
- 200: system
- 300: computing system
- 400: computer program product
- 500: computer readable medium

## Claims

1. A computer-implemented method (100) for reporting about a status of a plant, wherein the method comprises the steps of:
(S2) receiving by an artificial intelligence, Al, module (50) a query to generate a plant status report (5);
(S3) determining by the AI module at least one plant parameter status information (19) of at least one plant parameter of interest based on the query,
wherein the plant parameter status information comprises operational information of the plant parameter of interest;
(S4) generating the plant status report (5) including the determined plant parameter status information.

2. The method according to the preceding claim,
wherein the query is generated (S1) by a user (1) via a user interface (3), wherein the user interface (3) is adapted to receive user input,
wherein the method further comprises the steps of:
(S2a) sending the query from the user interface (3) to the AI module (50); and
after (S4) generating the plant status report (5),
(S5) sending the generated plant status report (5) to the user (1).

3. The method according to one of the preceding claims, wherein the method further comprises the steps of:
determining (S6) control instructions (17) for controlling one or more plant components (7) based on the determined plant parameter status information (19), and
generating (S4) the plant status report (5) including the determined control instructions (17).

4. The method according to one of the preceding claims,
wherein the plant status report (5) comprises at least one of text information (9), image information (11), video information (13), audio information (15), statistical information (35), numerical values (37), tables (39), visualizations (41) and/or figures (43).

5. The method according to one of the preceding claims,
wherein the plant parameter status information (19) includes current status information (21) comprising data of the plant parameter of interest acquired at a current time instance, and/or
wherein the plant parameter status information (21) includes past status information (23) comprising data of the plant parameter of interest (19) acquired at a past time instance or range,
preferably wherein one or more of the data of the current status information (19) or the past status information (23) is detected by sensors adapted to acquire operational information of the plant parameter of interest.

6. The method according to one of the preceding claims,
wherein the plant parameter status information (19) includes or is based on information of historical documents (25).

7. The method according to one of the preceding claims,
wherein the plant parameter status information (19) includes information about at least one of a plant component (7), a key performance indicator (27), KPI, of the plant component (7) and/or a process variable (29).

8. The method according to one of the preceding claims, wherein the method comprises the steps of:
determining by the AI module (50) a forecast information (31) about a forecasted future state of the plant parameter of interest based on the operational information of the plant parameter of interest, and
generating (S4) the plant status report (5) including the forecast information (31).

9. The method according to one of the preceding claims,
wherein the plant status report (5) comprises a shift handover report (33) comprising information for a handover from a first shift of plant operators to a second shift of plant operators,
wherein the shift handover report (33) includes a summary of one or more plant parameters of interest for the second shift of plant operators.

10. The method according to one of the preceding claims,
wherein the AI module (50) comprises at least one of an intent identifying module (51) adapted to identify an intend of the query, a large language model, LLM, module (53) adapted to create an LLM output (55) based on current, past or forecasted status information of the plant parameter of interest, and a generative AI module (57) adapted to generate the plant status report.

11. A system (200) comprising an artificial intelligence, Al, module (50), wherein the system (200) is configured to carry out and/or control the method (100) of any of claims 1 to 10.

12. The system (200) according to claim 11, wherein the system (200) further comprises one or more sensors (63) configured to acquire data of the plant parameter of interest.

13. The system (200) according to one of claims 11 or 12, wherein the system (200) further comprises at least one user interface (3) adapted to receive user input.

14. A computer program product (400) comprising instructions which, when the program is executed by a computing system (300), cause the computing system (300) to carry out and/or control the method of any of claims 1 to 10.

15. A computer-readable medium (500) comprising instructions which, when executed by a computing system (300), cause the computing system (300) to carry out and/or control the method of any of claims 1 to 10.
